Europäisches Patentamt

**European Patent Office**

**Office européen des brevets**

(19)

(11) Numéro de publication : **0 145 523
B1**

# FASCICULE DE BREVET EUROPÉEN

(12)

(45) Date de publication du fascicule du brevet :
**23.03.88**

(21) Numéro de dépôt : **84401991.9**

(22) Date de dépôt : **04.10.84**

(51) Int. Cl.⁴ : **A 47 C 31/10, A 44 B 18/00,
B 29 C 67/22, B 29 C 67/18,
B 29 C 33/12**

(54) **Bande ou analogue munie d'éléments d'accrochage et destinée à etre portée par un article moule, et moule utilisé.**

(30) Priorité : **07.10.83 FR 8316001**

(43) Date de publication de la demande :
**19.06.85 Bulletin 85/25**

(45) Mention de la délivrance du brevet :
**23.03.88 Bulletin 88/12**

(84) Etats contractants désignés :
**AT BE DE GB IT NL**

(56) Documents cités :
**DE-A- 1 924 537
FR-A- 2 423 666
FR-A- 2 463 870
FR-A- 2 466 330**

(73) Titulaire : **APLIX
75bis, avenue Marceau
F-75116 Paris (FR)**

(72) Inventeur : **Billarant, Patrick
6, avenue Camus
F-44000 Nantes (FR)**

(74) Mandataire : **Coutel, Jean-Claude et al
Cabinet AYMARD & COUTEL 20, rue Vignon
F-75009 Paris (FR)**

EP 0 145 523 B1

Jouve, 18, rue St-Denis, 75001 Paris, France

## Description

L'invention est relative à une bande, notamment un ruban auto-agrippant, munie sur une face d'éléments d'accrochage destinés à assurer l'accrochage d'un revêtement sur un article moulé et destinée à être portée, par son autre face, par cet article moulé auquel elle adhère lors de l'opération de moulage elle-même, l'accrochage du revêtement se faisant par exemple par coopération des éléments d'accrochage avec la structure fibreuse ou pelucheuse du verso du revêtement.

Plus particulièrement, l'invention concerne une bande de ce type destinée à être assujettie à un article moulé, notamment en mousse de polyuréthane, par exemple une assise ou un dossier de siège d'automobile, et à retenir, par sa face extérieure munie d'éléments d'accrochage, un article muni d'éléments d'accrochage complémentaires, notamment un revêtement du genre housse.

Par le document FR-A-2 466 330, on connaît un procédé permettant d'assujettir une telle bande sur un article moulé, notamment en mousse de polyuréthane. Suivant ce procédé, on fait adhérer la bande à l'article moulé lors de l'opération de moulage par simple adhérence du produit de moulage sur la face arrière lisse de la bande. Le cas échéant cette face arrière de la bande peut être revêtue d'une pellicule d'étanchéité appliquée par enduction et réalisant la solidarisation de la bande et du produit de moulage. Dans ce procédé, la fixation de la bande sur l'article moulé n'est pas très résistante du fait du contact facial lisse.

L'invention a pour but de fournir une bande du type indiqué qui adhère fermement à la matière de moulage lors de l'opération de moulage ellemême.

A cet effet, la bande selon l'invention, constituée par une semelle dont une première face, tournée vers le revêtement, porte des éléments d'accrochage et deux zones marginales dépourvues d'éléments d'accrochage et destinées à être collées temporairement sur la face intérieure du moule pour l'opération de moulage de l'article moulé, est caractérisée par le fait que la seconde face de la semelle, tournée vers l'intérieur du moule, porte, sur une partie au moins de sa largeur, des éléments d'ancrage prévus pour assurer l'adhérence de la bande avec le produit de moulage, faisant saillie de ladite seconde face et comportant une tête élargie portée par l'extrémité libre d'une tige de liaison avec la semelle.

Suivant une caractéristique de l'invention, les éléments d'accrochage et les éléments d'ancrage sont venus de matière avec la semelle.

Suivant une autre caractéristique, la densité de population des éléments d'ancrage est inférieure à celle des éléments d'accrochage.

La bande peut être rendue adhérente par un encollage préalable desdites zones marginales, avec pellicule de protection.

On comprendra bien l'invention à la lecture de la description qui va suivre et en référence au dessin annexé dans lequel :

Fig. 1 est une vue en coupe transversale d'une bande selon un mode de réalisation de l'invention ;

Fig. 2 est une vue analogue à la fig. 1 et montre la bande assujettie à la face intérieure du moule, avant moulage ;

Fig. 3 est une vue analogue à la fig. 1 et montre l'article moulé fini qui porte la bande de retenue d'un revêtement.

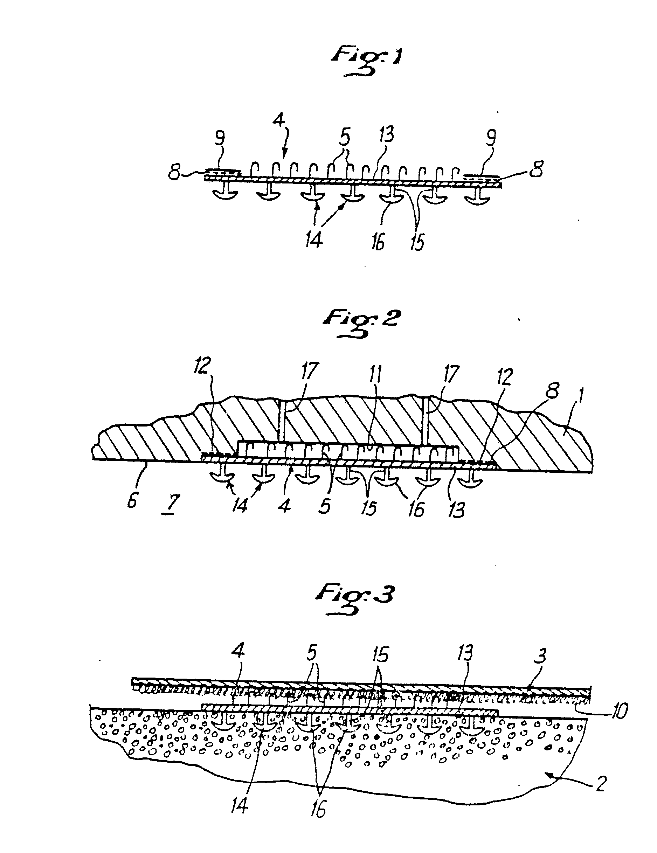

On a montré à la fig. 2 une partie d'un moule 1, par exemple en aluminium, destiné à la fabrication d'un article moulé 2, montré en partie à la fig. 3. Cet article est, dans le mode d'application préféré de l'invention, une assise ou un dossier en mousse de polyuréthane, type polyether, pour siège de véhicule.

L'article 2 est destiné à recevoir un revêtement 3 (fig. 3), par exemple une housse de siège dans l'application considérée. L'article moulé 2 retient le revêtement 3 par l'intermédiaire d'une bande accrochante 4 qui est assujettie fixement à l'article moulé 2 et qui, sur sa face tournée vers le revêtement 3, porte des éléments d'accrochage 5, par exemple en forme de crochets, destinés à coopérer avec le verso du revêtement 3 présentant, à cet effet, une structure 10 fibreuse ou pelucheuse, par exemple du type jersey gratté.

De façon connue, la bande 4 est assujettie à l'article moulé 2, sur la face extérieure de celui-ci, lors de l'opération de moulage elle-même. Pour cela, comme montré à la fig. 2 la bande 4 est provisoirement fixée sur la face intérieure 6 de la cavité de moulage 7 ménagée dans le moule 1. Pour une telle liaison, la bande 4, sur sa face extérieure portant les éléments d'accrochage 5, présente deux zones marginales longitudinales démunies d'éléments d'accrochage et portant une enduction adhésive 8 protégée par une pellicule 9 destinée à être enlevée lors du collage de la bande 4 sur la face intérieure 8 du moule.

Pour la réception de la bande 4, le moule 1 présente une cavité 11 de réception des éléments d'accrochage 5 et, de part et d'autre de cette cavité, deux cavités latérales 12, pour la réception des zones marginales encollées de la bande 4, ces zones étant dégagées par enlèvement des pellicules de protection 9. La profondeur de la cavité ou gorge principale 11 est telle que les éléments d'accrochage 5 peuvent venir porter contre son fond et que la face de la semelle 13 opposée à celle qui porte les éléments d'accrochage affleure la face intérieure du moule 1 ; les cavités ou gorges latérales 12 ont une profondeur qui correspond sensiblement à celle de la semelle 13. De la sorte, la face de la semelle 13 opposée à celle qui porte les éléments d'accrochage 5 prolonge la surface intérieure 6 sans solution de continuité ; de plus, la bande 4 est maintenue en appui contre le moule 1, d'une part, par les zones latérales en appui dans les cavités 12 et, d'autre part, le cas échéant, au centre, par les éléments d'accrochage 5 en appui contre le fond de la cavité 11. Ainsi, lors du moussage du produit de moulage, la pression de ce produit qui s'exerce sur la bande 4 ne produit aucune déformation de celle-ci.

Du fait que la face de la semelle 13 tournée vers l'intérieur du moule est au niveau de la face intérieure 6 de celui-ci, cette semelle est en saillie, d'une distance égale à son épaisseur, sur l'article fini 2, comme montré à la fig. 3.

Pour assurer une adhérence parfaite de la bande 4 avec le produit de moulage, on prévoit, selon l'invention, des éléments d'ancrage 14 qui font saillie de la semelle 13, sensiblement à angle droit. Chaque élément d'ancrage comporte une tige ou pied 15 dont l'extrémité libre, éloignée de la semelle 13, porte une tête élargie 16. La tête 16 peut avoir toute forme appropriée ; à titre d'exemple, elle pourrait être constituée par des pétales ou des lèvres séparés, de part et d'autre de la tige 15, les angles étant arrondis ou aigus ; à titre d'autre exemple, la tête 16 pourrait être en forme de flèche ou de tête de champignon.

Comme on le voit sur les figures, la densité de population des éléments d'ancrage 14 est inférieure à celle des éléments d'accrochage 5. Par exemple, pour une bande 4 de 30 mm de large, il peut exister douze rangées d'éléments d'accrochage 5 et seulement sept rangées d'éléments d'ancrage 14, l'espacement longitudinal étant de 1 mm pour les éléments d'accrochage et de 4 mm pour les éléments d'ancrage.

Comme montré sur les figures, les éléments d'ancrage 14 peuvent être disposés sur une plus grande largeur que les éléments d'accrochage 5, c'est-à-dire que les éléments d'ancrage extrêmes peuvent être situés au droit des zones marginales encollées de la bande. En direction perpendiculaire à la semelle, les éléments d'accrochage 5 peuvent avoir une hauteur d'environ 2 mm et les éléments d'ancrage 14 une hauteur d'environ 3 à 5 mm.

Selon une caractéristique de l'invention, les éléments d'accrochage 5 et les éléments d'ancrage 14 sont venus de matière avec la semelle 13. Pour cela, on extrude à travers une filière de profil approprié une bande de section constante comportant la semelle 13 et des rails ou profilés dont le profil correspond à celui des éléments d'accrochage 5 et à celui des éléments d'ancrage 14 ; après extrusion et refroidissement, les profilés sont tronçonnés transversalement, avec ou sans enlèvement de matière, pour l'obtention d'éléments d'accrochage séparés et d'éléments d'ancrage séparés.

Quand la bande 4 a été placée dans le moule 1, comme montré à la fig. 2, le produit de moulage est injecté dans le moule dont il remplit la cavité 7 par moussage. Pendant cette phase, le produit de moulage pénètre intimement entre les éléments d'ancrage 14 et, comme montré à la fig. 3 pour le produit fini, les têtes 16 constituent autant de points d'ancrage qui assurent un assujettissement ferme de la bande 4 sur le produit moulé.

Il est à noter que ce mode d'adhérence de la bande est du type mécanique, et non pas chimique comme cela est connu dans la technique antérieure, cette liaison mécanique étant particulièrement résistante du fait que, à la surface du produit moulé, il se crée naturellement une peau superficielle qui est plus résistante que le reste de l'article. Il est à noter également que l'espacement des éléments d'ancrage 14, aussi bien dans le sens transversal que dans le sens longitudinal, n'affecte pratiquement pas la résistance de cette peau.

Quand l'article moulé 2 est extrait du moule 1, avec la bande 4 fermement ancrée sur l'article, la semelle 13 est en saillie par rapport à l'article 2, d'une distance égale à son épaisseur, de sorte que les éléments d'accrochage 5 sont parfaitement dégagés pour pouvoir coopérer avec la structure 10 du revêtement 3. Sur la fig. 3, le revêtement 3 a été représenté légèrement écarté de l'article moulé 2, pour la clarté du dessin.

Il est à noter que, pendant l'opération de moulage, quel que soit le genre du produit de moulage, celui-ci ne peut pas passer dans la cavité 11 du fait que les zones marginales de la bande sont collées sur la surface intérieure du moule, au surplus dans les petites cavités 12, ce mode de liaison provisoire de la bande avec le moule constituant un joint d'étanchéité efficace.

Selon une autre caractéristique de l'invention, la cavité 11 communique avec l'extérieur par au moins un évent 17 qui évite une surpression dans la cavité 11 lors de la montée en température pendant le moulage, cette surpression risquant de provoquer un décollement de la bande dans les cavités 12 et, par conséquent, un passage du produit de moulage dans la cavité 11.

## Revendications

1. Bande ou analogue, munie d'éléments d'accrochage (5) destinés à assurer l'accrochage d'un revêtement (3) sur un article moulé (2), ce dernier étant par exemple en mousse de polyuréthane et l'accrochage se faisant par exemple par coopération des éléments d'accrochage avec la structure fibreuse ou pelucheuse du verso du revêtement, cette bande étant portée par ledit article et comportant une semelle (13) dont une première face, tournée vers le revêtement, porte les éléments d'accrochage (5) et présente deux zones marginales dépourvues desdits éléments d'accrochage et destinées à être collées temporairement sur la face intérieure (6) d'un moule (1) pour l'opération de moulage de l'article moulé (2), caractérisée par le fait que la seconde face de la semelle (13), tournée vers l'intérieur du moule, porte, sur une partie au moins de sa largeur, des éléments d'ancrage (14) prévus pour assurer l'adhérence de la bande avec le produit de moulage, faisant saillie de ladite seconde face et comportant une tête élargie (16) portée par l'extrémité libre d'une tige (15) de liaison avec la semelle (13).

2. Bande selon la revendication 1, caractérisée par le fait que les éléments d'accrochage (5) et les éléments d'ancrage (14) sont venus de matière avec la semelle (13).

3. Bande selon l'une des revendications 1 et 2, caractérisée par le fait que la densité de population des éléments d'ancrage (14) est inférieure à celle des éléments d'accrochage (5).

4. Bande selon l'une des revendications 1 à 3, caractérisée par le fait que lesdites deux zones marginales dépourvues d'éléments d'accrochage portent un adhésif (8), protégé par une pellicule (9), destiné au collage provisoire de la bande sur la face intérieure (6) du moule (1).

5. Bande selon l'une des revendications 1 à 4, caractérisée par le fait que les éléments d'ancrage (14) sont séparés.

6. Bande selon l'une des revendications 1 à 5, caractérisée par le fait que la tête élargie (16) des éléments d'ancrage (14) porte des lèvres ou pétales de part et d'autre de la tige (15).

7. Bande selon l'une des revendications 1 à 6, caractérisée par le fait que la tige (15) est sensiblement perpendiculaire au plan de la semelle (13).

8. Moule utilisé pour l'application de la bande selon l'une des revendications 1 à 7 sur l'article moulé lors de l'opération de moulage elle-même, caractérisé par le fait qu'il comporte une cavité centrale (11) pour la réception des éléments d'accrochage (5) et deux cavités latérales (12) pour la réception desdites zones marginales de la semelle (13).

9. Moule selon la revendication 8 caractérisé par le fait que la cavité centrale (11) communique avec l'extérieur du moule par au moins un évent (17).

10. Moule selon l'une des revendications 8 et 9, caractérisé par le fait que les cavités latérales (12) ont des dimensions telles que la face de la semelle (13) tournée vers l'intérieur du moule prolonge la surface intérieure (6) de celui-ci sans solution de continuité.

11. Moule selon l'une des revendications 8 à 10, caractérisé par le fait que la cavité centrale (11) a une profondeur telle que les éléments d'accrochage (5) s'appuient contre son fond pendant le moulage.

## Claims

1. Tape or the like, provided with fastening elements (5) intended to cause holding of a cover (3) on a molded article (2), the latter being for instance in polyurethane foam and the holding being made for instance by engagement of the fastening elements with the fibrous or plush-like cover back face structure, this tape being carried by said article and comprising a sole (l3) a first face of which, facing the cover, carries the fastening elements (5) and comprises two marginal aeras devoid of said fastening elements and intended to be temporarily glued on the inner face (6) of a mold (1) for the step of molding the molded article (2), characterized by the fact that the second face of the sole (13), facing the inside of the mold, carries on at least a part of its width anchoring elements (14) provided for causing the adherence of the tape with the molding product and projecting from said second face and comprising an enlarged head (16) supported by the free end of a rod (15) for connection to the sole (13).

2. Tape according to Claim 1, characterized by the fact that the fastening elements (5) and the anchoring elements (14) are integrally formed with the sole (13).

3. Tape according to one of Claims 1 and 2, characterized by the fact that the population density of the anchoring elements (14) is lower than that of the fastening elements (5).

4. Tape according to one of Claims 1 to 3, characterized by the fact that said two marginal areas devoid of fastening elements carry an adhesive (8), protected by a film (9), intended to temporarily stick the tape on the inner face (6) of the mold (1).

5. Tape according to one of Claims 1 to 4, characterized by the fact that the anchoring elements (14) are separate.

6. Tape according to one of Claims 1 to 5, characterized by the fact that the enlarged head (16) of the anchoring elements (14) is provided with lips or petals on each side of the stem (15).

7. Tape according to one of Claims 1 to 6, characterized by the fact that the stem (15) is substantially perpendicular to the plane of the sole (13).

8. Mold used to apply the tape according to one of Claims 1 to 7 to the molded article during the molding step itself, characterized by the fact that it comprises a center cavity (11) to accomodate the fastening elements (5) and two lateral cavities (12) to accomodate said marginal areas of the sole (13).

9. Mold according to Claim 8, characterized by the fact that the center cavity (11) communicates with the outside of the mold through at least one vent (17).

10. Mold according to one of Claims 8 and 9, characterized by the fact that the lateral cavities (12) have dimensions such that the face of the sole (13) facing the inside of the mold continues the inner face (6) of the mold without discontinuity.

11. Mold according to one of Claims 8 to 10, characterized by the fact that the depth of the center cavity (11) is such that the fastening elements (5) rest against its bottom during molding.

## Patentansprüche

1. Befestigungsband o. dgl., welches mit Verankerungselementen (5) zur Befestigung eines Überzugs (3) auf einem beispielsweise aus Polyurethanschaum gebildeten Formgegenstand (2) versehen ist und bei dem die Befestigung beispielsweise durch Eingriff der Verankerungselemente in die faserige oder plüschartige Struktur der Rückseite des Überzugs erfolgt, wobei das Band durch den Formgegenstand getragen ist und einen Gurt aufweist, welcher auf der zum Überzug weisenden ersten Fläche Verankerungselemente (5) aufweist und mit zwei Randzonen versehen ist, die frei sind von Verankerungselementen und für ein kurzzeitiges Verkleben an der Innenfläche (6) einer Form (1) während der Herstellung des Formgegenstands (2) vorgesehen sind, dadurch gekennzeichnet, daß die zweite Fläche des Gurts (13), die zum Forminneren gerichtet ist, auf mindestens einem Teil ihrer Breite Befestigungselemente (14) für die Verbindung des Bands mit dem durch die Formgebung erzeugten Gegenstand aufweist, welche von der zweiten Fläche vorstehen und einen aufgeweiteten Kopf (16) besitzen, welcher vom freien Ende eines Verbindungsschafts (15) mit dem Gurt (13) getragen ist.

2. Band nach Anspruch 1, dadurch gekennzeichnet, daß die Verankerungselemente (5) und die Befestigungselemente (14) aus dem Material des Gurts (13) hergestellt sind.

3. Band nach einem der Ansprüche 1 und 2, dadurch gekennzeichnet, daß die Anzahl der Befestigungselemente (14) pro Flächeneinheit geringer als die der Verankerungselemente (5) ist.

4. Band nach einem der Ansprüche 1-3, dadurch gekennzeichnet, daß die beiden von Verankerungselementen freien Randzonen einen durch einen Schutzüberzug (9) geschützten Kleber (8) tragen, der zum provisorischen Ankleben des Bands an die Innenfläche (6) der Form (1) dient.

5. Band nach einem der Ansprüche 1-4, dadurch gekennzeichnet, daß die Befestigungselemente (14) getrennt voneinander angeordnet sind.

6. Band nach einem der Ansprüche 1-5, dadurch gekennzeichnet, daß der aufgeweitete Kopf (16) der Befestigungselemente (14) beidseits des Schafts (15) Lippen oder Schenkel aufweist.

7. Band nach einem der Ansprüche 1-6, dadurch gekennzeichnet, daß der Schaft (15) im wesentlichen senkrecht zur Ebene des Gurts (13) verläuft.

8. Form zum Aufbringen des Bandes nach einem der Ansprüche 1-7 auf den Formgegenstand während dessen Formgebung, dadurch gekennzeichnet, daß die Form einen zentralen Formhohlraum (11) zur Aufnahme der Verankerungselemente (5) und zwei seitliche Formhohlräume (12) für die Randzonen des Gurts (13) aufweist.

9. Form nach Anspruch 8, dadurch gekennzeichnet, daß der mittlere Formhohlraum (11) mit der Außenumgebung durch mindestens einen Lüftungskanal (17) verbunden ist.

10. Form nach einem der Ansprüche 8 und 9, dadurch gekennzeichnet, daß die seitlichen Formhohlräume (12) derartige Abmessungen aufweisen, daß die zum Forminneren gerichtete Fläche des Gurts (13) die Innenfläche (6) der Form ohne Aufhebung der Kontinuität verlängert.

11. Form nach einem der Ansprüche 8-10, dadurch gekennzeichnet, daß der mittlere Formhohlraum (11) eine Tiefe aufweist, daß die Verankerungselemente (5) sich während des Formvorgangs an seinem Boden abstützten.

*Fig:1*

*Fig:2*

*Fig:3*